(19) Europäisches Patentamt

European Patent Office

Office européen des brevets

(11) **EP 1 032 234 A1**

(12) **DEMANDE DE BREVET EUROPEEN**

(43) Date de publication:
**30.08.2000 Bulletin 2000/35**

(51) Int. Cl.⁷: **H04Q 7/38**, H04B 7/26

(21) Numéro de dépôt: **00106019.3**

(22) Date de dépôt: **14.09.1993**

(84) Etats contractants désignés:
**AT BE CH DE DK ES FR GB GR IE IT LI LU MC NL PT SE**

(30) Priorité: **15.09.1992 FR 9210995**

(62) Numéro(s) de document de la (des) demande(s) initiale(s) en application de l'article 76 CBE:
**93402233.6 / 0 589 753**

(71) Demandeur: **ALCATEL**
**75008 Paris (FR)**

(72) Inventeur: **Dupuy, Bernard**
**75017 Paris (FR)**

(74) Mandataire:
**El Manouni, Josiane et al**
**COMPAGNIE FINANCIERE ALCATEL**
**Dépt. Propr. Industrielle,**
**30, avenue Kléber**
**75116 Paris (FR)**

Remarques:
Cette demande a été déposée le 28 - 03 - 2000 comme demande divisionnaire de la demande mentionnée sous le code INID 62.

(54) **Procédé de transmission d'une information d'avance temporelle à un mobile évoluant dans un réseau de radiotéléphonie cellulaire, mobile, station de base et système de transmission correspondants**

(57) La présente invention concerne notamment un procédé d'échange d'informations entre notamment un mobile, au moins deux stations émettrices-réceptrices et au moins un contrôleur de stations compris dans un réseau de radiotéléphonie cellulaire. Les échanges d'information entre le mobile et les stations sont de type à accès multiple à répartition dans le temps. Le procédé consiste à fournir au mobile une information d'avance temporelle de valeur prédéterminée lorsqu'il passe d'une première cellule, correspondant à la couverture géographique d'une première des stations, à une deuxième cellule, correspondant à la couverture géographique d'une deuxième des stations.

FIG. 2

**Description**

Le domaine de l'invention est celui de la transmission d'informations temporelles à des mobiles évoluant dans un réseau de radiotéléphonie cellulaire, tel que par exemple un réseau GSM (Groupe Spécial Mobile) lorsque ces mobiles passent d'une cellule à une autre. Ces mobiles sont par exemple constitués de radiotéléphones embarqués dans des véhicules et les informations temporelles doivent permettre à un mobile qui passe d'une cellule à une autre, d'avancer temporellement l'émission des informations numériques qu'il doit transmettre, afin d'être en synchronisme avec la station émettrice-réceptrice de la nouvelle cellule. Dans la terminologie GSM, une telle procédure est couramment appelée "handover" et ce terme sera repris par la suite.

La description qui va suivre reprend les termes couramment utilisés dans la terminologie GSM. Pour plus d'informations, on peut se référer à la revue "Digital Cellular Mobile Communication Seminar" du séminaire tenu à ce sujet du 16 au 18 octobre 1990 à Nice.

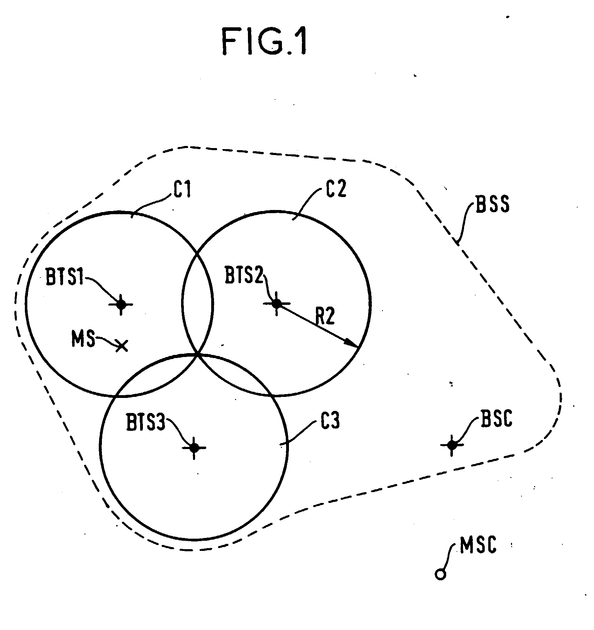

La figure 1 représente la structure d'un réseau de radiotéléphonie cellulaire, tel qu'un réseau de type GSM.

Un mobile, noté MS et par exemple constitué par un radiotéléphone, évolue dans une cellule C1 constituée par la couverture géographique d'une station émettrice-réceptrice de base, notée BTS1. D'autres cellules C2, C3 comprennent chacune une station émettrice-réceptrice de base BTS2, BTS3. Chacune de ces stations BTS1 à BTS3 constitue une des composantes du réseau GSM et comprend un ou plusieurs émetteurs-récepteurs, associés chacun à une antenne et à de l'équipement de traitement. Les couvertures géographiques se recouvrent partiellement. Les stations BTS1 à BTS3 sont gérées par un contrôleur de station de base, noté BSC. Le contrôleur BSC a notamment pour fonction de gérer les canaux de fréquence des stations BTS. Un contrôleur BSC associé à un certain nombre de stations BTS constitue un système de station de base (BSS). D'autres contrôleurs peuvent également être prévus, chacun pilotant un nombre de stations BTS prédéterminé, et étant chacun relié à un centre de commutation, noté MSC, qui est la structure maître d'un réseau GSM. Un MSC donné peut donc piloter le fonctionnement de plusieurs systèmes BSS constituant un réseau mobile de terrain public, couramment appelé PLMN.

Le fonctionnement d'un tel réseau est le suivant: le mobile MS envoie des trains de données numériques sous forme de paquets à la station BTS1 aussi longtemps qu'il se situe dans la cellule C1 et la station BTS1 retransmet ces trains vers le contrôleur BSC qui les transmet à leur destinataire par l'intermédiaire du commutateur MSC. Le destinataire peut être constitué par une autre station mobile ou par une station fixe.

Chaque paquet de données, constituant par exemple des données de parole, est transmis dans un intervalle de temps de durée 577 µs, huit intervalles de temps successifs constituant une trame. Huit stations mobiles MS peuvent donc communiquer sur le même canal radio, c'est à dire avec la même fréquence porteuse, grâce à l'accès multiple à répartition dans le temps (AMRT ou en anglais TDMA). Habituellement, deux à quatre canaux sont affectés à chaque station BTS et 16 à 32 canaux radio sont donc disponibles à l'émission (comme pour la réception) au niveau de chaque cellule.

Un des problèmes du système GSM est la synchronisation des intervalles de temps affectés à un mobile MS par rapport à l'horloge maître située au niveau de la station BTS. En effet, il est nécessaire de tenir compte du temps de propagation des ondes radio entre un mobile MS et sa station de base BTS puisque les mobiles et la station BTS dont ils dépendent ont chacun une horloge bit interne qui leur est propre. Comme un intervalle de temps dure 577 µs, et sachant qu'une onde radio parcourt 300 m en 1 µs ($3 \times 10^8$ m/s), la base de temps du mobile MS doit tenir compte de ce décalage temporel, de 1 µs par 300 m de distance séparant le mobile MS de sa station BTS, pour ne pas émettre de données pendant l'intervalle de temps affecté à un autre mobile MS.

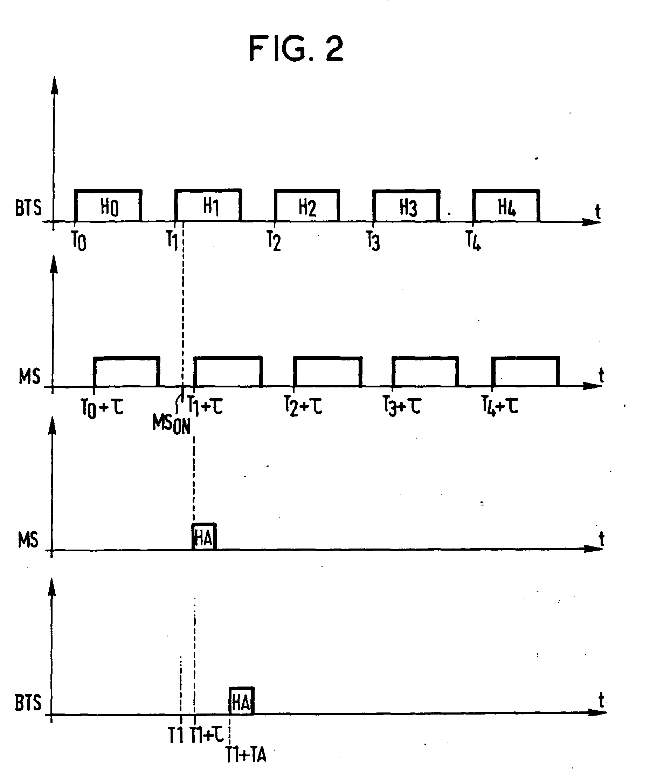

La figure 2 est un chronogramme corrélatif de signaux émis par la station BTS1 et par le mobile MS et montre comment le décalage temporel adéquat est communiqué au mobile.

La station BTS1, qui gère la cellule dans laquelle se trouve le mobile MS, émet régulièrement, à des instants référencés $T_0$, $T_1$, $T_2$, $T_3$ et $T_4$, et sur un canal de synchronisation SCH (Synchronisation CHannel) appartenant à un canal commun spécifique appelé BCCH (Broadcast Common CHannel) destiné de manière générale à transmettre des informations de synchronisation aux mobiles, un signal d'horloge $H_0$, $H_1$, $H_2$, $H_3$, $H_4$. Ce signal est utilisé lorsque le mobile MS doit être rattaché à une cellule du réseau GSM, par exemple lors de sa mise sous tension ou alors, comme il sera précisé par la suite, en cas de handover.

Le mobile MS se connecte pour la première fois au réseau après avoir été mis sous tension, il ne peut recevoir le signal d'horloge qu'à partir de l'instant, noté $MS_{ON}$, où il est mis sous tension.

Etant donné que le mobile MS ne se trouve pas, en général, au pied de la station de base BTS1, le premier signal d'horloge qu'il reçoit après l'instant $MS_{ON}$, ici le signal $H_1$, est décalé d'un temps noté τ par rapport à son instant d'émission $T_1$ par la station de base BTS1. Le signal $H_1$ est donc reçu par le mobile à l'instant $T_1 + \tau$.

A cet instant, le mobile MS qui souhaite se connecter à la station BTS1 envoie vers cette dernière, sur un canal de signalisation, un message d'accès appelé Random Access et constitué par un Access Burst. Dans le cas d'un handover, ce message est appelé Handover Access et noté HA. Chaque Handover Access a une durée intérieure à celle d'un burst constituant un signal normal (appelé Normal Burst) contenant par exemple des données de parole, de sorte qu'il ne peut interférer avec les signaux émis par un autre mobile dans un autre intervalle de temps.

A la réception de ce signal (temps $T_1$+TA), la station BTS1 peut déterminer le temps TA (pour Timing Advance ou en français avance temporelle) séparant cette réception de l'émission du signal d'horloge $H_1$. Ce temps TA correspond à deux fois le temps de transmission d'un signal entre le mobile MS et la station BTS1 c'est-à-dire à deux fois le temps $\tau$. La station BTS1 envoie alors, sur un canal de signalisation appelé AGCH (Access Grant CHannel), un message au mobile MS pour lui indiquer qu'il doit émettre ses signaux avec une avance de TA par rapport à son signal d'horloge : le mobile peut alors émettre des signaux normaux sans risque de recouvrement avec ceux émis par d'autres mobiles. De ce tait, on est assuré que les signaux émis par les différents mobiles sur un canal de transmission donné arrivent bien successivement à la station BTS1.

De ce fait, on est assuré que les signaux émis par les différents mobiles sur un canal de transmission donné arrivent bien successivement à la même station BTS, sans qu'il n'y ait de recouvrement de ces signaux. Il est cependant nécessaire d'effectuer fréquemment une opération de synchronisation des mobiles MS puisque leur distance par rapport à la station BTS à laquelle ils sont rattachés peut évoluer.

Un problème connu est celui de gérer le passage du mobile MS d'une cellule à une autre. Sur la figure 1, le mobile MS reçoit non seulement des signaux de BTS1, mais également de BTS2 et de BTS3, et, lorsque la puissance des signaux reçus de BTS1 devient intérieure à celle des signaux reçus par exemple de BTS2, le BSC connecte le mobile MS à la station BTS2 qui va assurer la poursuite de la transmission. Cette situation est typique lorsque le mobile MS s'éloigne de BTS1 et se rapproche de BTS2. Il est alors nécessaire de modifier l'information d'avance temporelle TA pour que le mobile se synchronise sur la station BTS2 de la nouvelle cellule C2.

On connaît trois types de handover permettant d'assurer une telle synchronisation: le handover synchrone, le handover pseudo-synchrone et le handover asynchrone, selon que les stations de base sont respectivement synchronisées, ont une horloge interne de même fréquence de déphasage connu, ou que leurs horloges sont asynchrones et que le déphasage entre ces horloges est inconnu.

Le handover synchrone consiste à piloter les horloges des différentes stations BTS d'un système GSM donné de telle sorte que leurs signaux d'horloge soient synchrones. Ainsi, lorsqu'un mobile passe d'une cellule à une autre, il n'est pas nécessaire de lui fournir une nouvelle information d'avance temporelle, puisque celle-ci est immédiatement déduite de celle qu'il utilisait antérieurement. Cependant, cette solution suppose, pour être généralisée, de synchroniser toutes les stations BTS et sa mise en oeuvre est donc coûteuse.

Pour pallier cet inconvénient, on utilise le handover pseudo-synchrone qui permet de synchroniser un mobile sur l'horloge de la station de la nouvelle cellule en prenant en compte le décalage temporel existant entre les horloges de l'ancienne et de la nouvelle station. Ce type de handover est par exemple décrit dans la demande de brevet européen n°0.398.773 de MATRA COMMUNICATION publiée le 22 novembre 1990. Cette solution présente l'inconvénient d'être complexe à mettre en oeuvre et nécessite une phase d'apprentissage pour le système BSS.

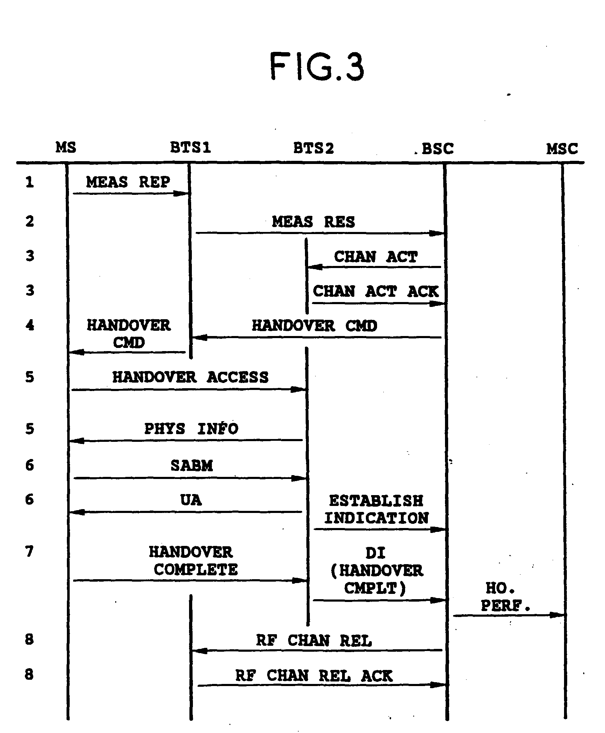

Le handover asynchrone est le plus fréquemment rencontré et le plus simple à mettre en oeuvre. Son principe est représenté à la figure 3. On se placera dans le cas où le mobile MS quitte la cellule C1 pour entrer dans la cellule C2. Huit étapes de transmission successives sont ici nécessaires.

L'étape 1 est celle pendant laquelle le mobile MS envoie à la station BTS1 un message MEAS REP, assimilable à une demande de changement de cellule, contenant des résultats de mesures qui sont utilisées par le contrôleur BSC pour déclencher un handover. Ces résultats de mesure indiquent par exemple que le mobile reçoit mieux les signaux émis périodiquement par la station BTS2 que ceux émis par la station BTS1. Ce message est envoyé toutes les 0,5s à la station BTS1 par le mobile MS. A l'étape 2, la station BTS1 transmet cette information (message MEAS RES) au contrôleur BSC qui juge si un handover est nécessaire. Les critères de décision sont notamment la qualité et la puissance des signaux reçus. D'autres types d'informations sont disponibles au niveau du MSC ou du BSC pour décider si un handover doit être effectué. Nous supposerons que ce cas se présente effectivement. A l'étape 3, le contrôleur BSC active un canal de la station BTS2 (message CHAN ACT) et celle-ci acquitte l'allocation (message CHAN ACT ACK). A l'étape 4, le contrôleur BSC envoi un ordre de handover (message HANDOVER CMD) à la station BTS1 qui le retransmet immédiatement au mobile MS de manière transparente. Commence alors la procédure de handover au niveau du mobile MS (étape 5) qui envoie des messages HA successifs (HANDOVER ACCESS) à BTS2 avec une avance temporelle nulle, c'est à dire sans tenir compte de l'éloignement. Cette étape a été précédemment illustrée à la figure 2. La nouvelle information d'avance temporelle que le mobile MS doit utiliser ne lui est en effet pas connue et c'est la station BTS2 qui la lui fournit après l'avoir calculée (message PHYS INFO contenant entre autre l'indication TA). A l'étape 6, le mobile MS envoi un message de connexion SABM à la station BTS2 en prenant acte de la nouvelle synchronisation. La station BTS2 en informe le contrôleur BSC (message ESTABLISH INDICATION) et signale au mobile MS (message UA) qu'il a bien été entendu. A l'étape 7, le mobile MS envoie un message HANDOVER COMPLT à la station BTS2 pour l'informer que la procédure de handover est terminée et cette station retransmet immédiatement ce message vers le contrôleur BSC. Le contrôleur BSC en informe alors le centre de commutation MSC (message HANDOVER PERFORMED). A l'étape 8, le contrôleur BSC s'adresse à la station BTS1 (message RF CRAN REL) pour rendre disponible l'intervalle de temps préalablement alloué au mobile MS et celle-ci lui répond (message RF CHAN REL ACK).

A ce stade, le mobile MS dialogue avec la station BTS2 qui lui a alloué un intervalle de temps dans une trame véhiculée par une porteuse donnée, ainsi qu'une information d'avance temporelle TA.

Le principal inconvénient du handover asynchrone est que l'envoi de l'information d'avance temporelle TA au mobile est longue et nécessite environ 40 ms, auxquels il faut ajouter environ 10 ms de calcul de TA et 11e mobile ne peut continuer à émettre des données pendant ce temps. De plus, l'émission des signaux HA est imposée par le GSM et nécessite 5 ms par signal. D'autres délais participent à retarder le handover et il est fréquent que la communication soit coupée pendant plus de 100 ms. Il existe des logiciels d'extrapolation de la parole qui permettent de masquer une interruption de transmission, mais ceux-ci ne sont efficaces que pendant un temps subjectif, dépendant de l'oreille de l'interlocuteur. On s'accorde généralement à dire qu'au delà de 80 ms, l'interruption de communication est audible par un interlocuteur ayant une bonne oreille alors qu'un interlocuteur qui ne prête pas une attention particulière à la qualité des signaux de parole qui lui sont transmis peut ne pas remarquer avant 200 ms que ce qu'il entend n'est pas ce qui devrait lui parvenir (puisque les signaux sont générés par le logiciel d'extrapolation de parole).

Il en va de même de l'utilisateur du mobile qui ne peut recevoir des données de type phonie pendant que son mobile est en phase de handover. Cet inconvénient se manifeste notamment en milieu urbain où les cellules sont de taille réduite et où de nombreuses cellules peuvent être traversées pendant une conversation. Il s'en suit un désagrément d'utilisation d'un tel système.

La présente invention a notamment pour objectif de pallier ces inconvénients.

Plus précisément, un des objectifs de l'invention est de fournir un procédé de handover pouvant être appliqué à un réseau de radiotéléphonie cellulaire où les stations de base ne sont pas synchronisées, par exemple à un réseau de type asynchrone, le moins coûteux et le plus répandu, permettant de réduire le temps pendant lequel la communication est effectivement coupée lorsqu'un handover est effectué.

Un autre objectif de l'invention est de fournir un mobile, un contrôleur de stations ainsi qu'un système d'échange d'informations permettant de réduire le temps d'interruption de la parole lorsqu'un handover est réalisé.

Ces objectifs, ainsi que d'autres qui apparaîtront par la suite, sont atteints grâce à un procédé d'échange d'informations entre notamment un mobile, au moins deux stations émettrices-réceptrices et au moins un contrôleur de stations compris dans un réseau de radiotéléphonie cellulaire où les échanges d'information entre le mobile et les stations sont de type à accès multiple à répartition dans le temps, ce procédé consistant à fournir au mobile une information d'avance temporelle de valeur prédéterminée lorsque celui-ci passe d'une première cellule, correspondant à la couverture géographique d'une première des stations, à une deuxième cellule, correspondant à la couverture géographique d'une deuxième des stations.

Il n'existe ainsi pas de temps de calcul de cette information d'avance temporelle.

Avantageusement, le procédé consiste également à transmettre de la première station au mobile un ordre de changement de cellule en réponse à une demande de changement de cellule formulée par le mobile, l'information d'avance temporelle de valeur prédéterminée étant alors transmise au mobile par la première station en même temps que l'ordre de changement de cellule. Le résultat de ce procédé de handover est qu'il n'est pas nécessaire à la deuxième cellule de transmettre au mobile une mesure d'avance temporelle TA avant l'établissement du chemin de parole.

L'information d'avance temporelle est préférentiellement émise par le contrôleur de la première station, reçue par cette première station et retransmise par cette première station au mobile de façon transparente.

L'ordre de changement de cellule peut être transmis à la première station par le contrôleur de cette première station, l'information d'avance temporelle de valeur prédéterminée étant alors transmise de façon transparente au mobile par la première station en même temps que l'ordre de changement de cellule.

Ce procédé est avantageusement mis en oeuvre dans un réseau de radiotéléphonie cellulaire où les stations sont asynchrones entre elles.

Dans un premier mode de mise en oeuvre avantageux, l'information d'avance temporelle correspond au temps de transmission d'un signal radio entre la deuxième station et un mobile situé sur le rayon de taille maximale de la deuxième cellule.

Dans un deuxième mode de mise en oeuvre avantageux, l'information d'avance temporelle est égale à:

$$\frac{TA_M + TA_m}{2}$$

où $TA_M$ correspond à l'avance temporelle maximale des mobiles lorsqu'ils se connectent à la deuxième station et où $TA_m$ correspond à l'avance temporelle minimale de ces mobiles.

Ce procédé peut être appliqué à une procédure de handover interne ou externe.

Le réseau de radiotéléphonie cellulaire peut être de type GSM.

L'invention concerne également un mobile destiné à communiquer par accès multiple à répartition dans le temps avec des stations émettrices-réceptrices d'un réseau de radiotéléphonie cellulaire, le mobile comprenant des moyens d'extraction d'une information d'avance temporelle comprise dans un message transmis par une des stations lorsqu'il passe d'une première cellule, correspondant à la couverture géographique d'une première des stations, à une deuxième cellule, correspondant à la couverture géographique d'une deuxième des stations, ce message étant un ordre de changement de cellule qui lui est transmis par la première station.

L'invention concerne également un contrôleur de stations émettrices-réceptrices d'un réseau de radiotéléphonie cellulaire, ce contrôleur comportant une table dans laquelle une information d'avance temporelle prédéterminée est affectée à chaque station et, lorsque le mobile passe d'une première cellule, correspondant à la couverture géographique d'une première des stations, à une deuxième cellule, correspondant à la couverture géographique d'une deuxième des stations, le contrôleur transmet un ordre de changement de cellule à la première station, cet ordre de changement de cellule comprenant l'information d'avance temporelle affectée à la deuxième station.

L'invention concerne également un système d'échange d'informations entre notamment un mobile, au moins deux stations émettrices-réceptrices et au moins un contrôleur de stations compris dans un réseau de radiotéléphonie cellulaire où les échanges d'information entre le mobile et les stations sont de type à accès multiple à répartition dans le temps, le mobile comprenant des moyens d'extraction d'une information d'avance temporelle de valeur prédéterminée comprise dans un message transmis par une des stations lorsqu'il passe d'une première cellule, correspondant à la couverture géographique d'une première des stations, à une deuxième cellule, correspondant à la couverture géographique d'une deuxième des stations.

Ce message est avantageusement un ordre de changement de cellule émis en réponse à une demande de changement de cellule formulée par le mobile, l'information d'avance temporelle de valeur prédéterminée étant transmise au mobile par la première station en même temps que cet ordre de changement de cellule.

Le contrôleur utilisé dans un tel système comporte préférentiellement une table dans laquelle une information d'avance temporelle prédéterminée est affectée à chaque station et, lorsque le mobile passe d'une première cellule, correspondant à la couverture géographique d'une première des stations, à une deuxième cellule, correspondant à la couverture géographique d'une deuxième des stations, le contrôleur transmet un ordre de changement de cellule à la première station, cet ordre de changement de cellule comprenant l'information d'avance temporelle affectée à la deuxième station.

D'autres caractéristiques et avantages de l'invention apparaîtront à la lecture de la description suivante d'un mode de réalisation préférentiel, donné à titre illustratif et non limitatif, et des dessins annexés dans lesquels:

- la figure 1 représente la structure d'un réseau de type GSM;
- la figure 2 est un chronogramme corrélatif de signaux échangés entre une station et un mobile;
- la figure 3 représente une procédure de handover demandé par un mobile qui désire se connecter sur la station d'une cellule;
- la figure 4 représente une procédure de handover interne selon l'invention;
- la figure 5 représente une procédure de handover externe selon l'invention;
- la figure 6 représente une structure simplifiée d'un mobile utilisé dans la présente invention;
- la figure 7 représente une table dans laquelle une information d'avance temporelle de valeur prédéterminée est affectée à chaque station.

Selon l'invention, lorsqu'un mobile doit effectuer un handover (message HANDOVER CMD), la valeur de l'information d'avance temporelle qui lui est transmise correspond à la distance le séparant de la station qu'il reçoit le mieux (station BTS2). Cette valeur lui est transmise par la station BTS1 avec laquelle le mobile est en train de communiquer.

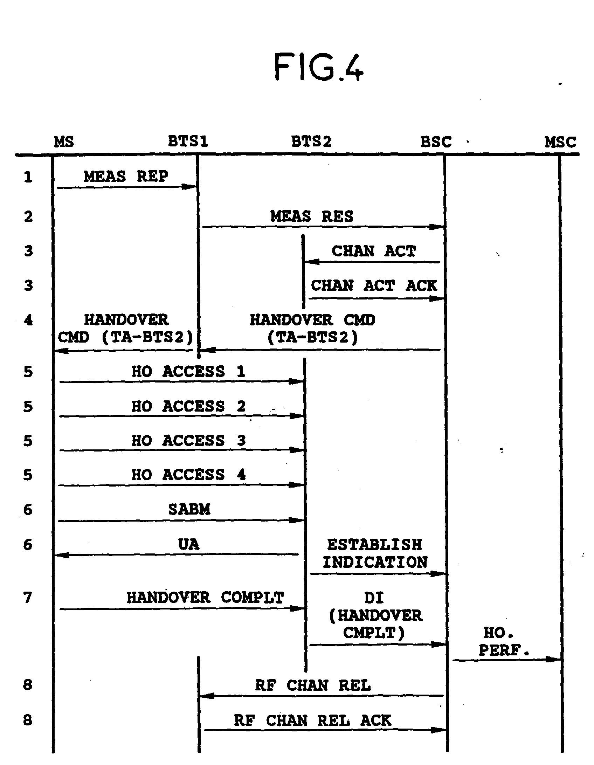

La figure 4 représente une procédure de handover selon l'invention. Ce handover est interne car les stations sont commandées par un même contrôleur.

Dans cette procédure, les étapes 1 à 3 sont identiques à celles de la figure 3, c'est à dire que le mobile MS envoie des résultats de mesure au contrôleur BSC qui décide si une procédure de handover doit être lancée. Ce contrôleur procède ensuite à une activation d'un canal de BTS2 et cette station acquitte l'allocation de canal.

Cependant, à l'étape 4, le contrôleur BSC envoie un ordre spécifique à la station BTS1, qui est toujours en communication avec le mobile MS, cet ordre spécifique étant le HANDOVER CMD connu auquel est ajoutée une information d'avance temporelle TA de valeur prédéterminée. L'information complète est ci-après notée "HANDOVER CMD (TA-BTS2)" et signifie qu'il est ordonné au mobile MS de se connecter sur la station BTS2 avec l'avance TA associée. La station BTS1 transmet de façon transparente cet ordre HANDOVER CMD (TA-BTS2) au mobile MS qui est alors informé du délai temporel avec lequel il devra avancer l'émission de ses données. A l'étape 5, le mobile MS émet au moins un message HANDOVER ACCESS à l'attention de la station BTS2 (ici quatre messages successifs sont envoyés pour fiabiliser la liaison, comme dans le cas du handover synchrone) pour que celle-ci mesure le TA effectif qui sera communiqué au mobile lors du prochain message SACCH, sans interférer avec la transmission de la parole.

Le signal HANDOVER CMD précédemment utilisé dans l'état de la technique dispose de bits qui sont disponibles pour l'émission de l'avance temporelle TA.

Les étapes 6 à 8 sont identiques à celles précédemment décrites en relation avec la figure 3.

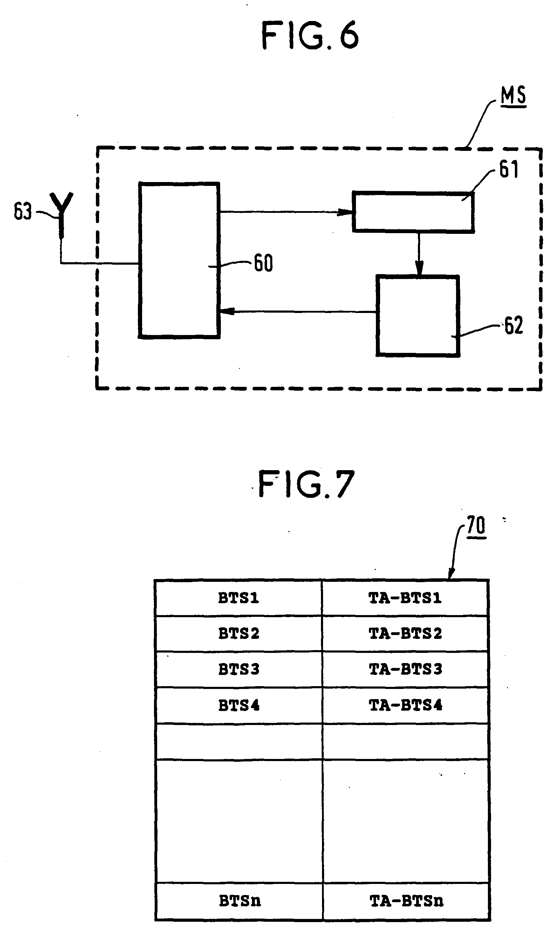

Le contrôleur BSC comporte une table (fig.7) dans laquelle une information d'avance temporelle de valeur prédéterminée est affectée à chaque station BTS. Ainsi, lorsqu'un mobile quelconque lui indique qu'il reçoit les signaux de synchronisation d'une deuxième station donnée, ou encore station d'une cellule cible, avec une puissance supérieure à ceux de la première station avec laquelle il communique, le contrôleur BSC est à même de lui fournir la valeur de TA correspondant à cette deuxième station.

Cette valeur de TA correspond par exemple au temps mis par un signal radio (se propageant à la vitesse de la lumière) émis par un mobile se situant à la limite de la cellule cible pour atteindre la station cible. Chaque station connaît en effet le rayon maximal de sa cellule (noté R2 sur la figure 1 pour la cellule C2) qui est fonction du trafic de cette cellule. Cette valeur de TA peut également prendre en compte le temps de garde disponible au niveau de chaque station BTS, comme il sera décrit par la suite.

La présente invention s'applique notamment à la procédure de handover effectuée lorsque le mobile MS tente d'entrer en communication avec la station BTS d'une cellule de taille réduite. En effet, selon le GSM, un mobile doit pouvoir correspondre avec une station BTS lorsque le multi-trajet des signaux qu'il émet est inférieur à 16 μs. Cette valeur correspond au retard maximal d'un signal transmis par le mobile à la station par rapport au temps où ce signal devrait théoriquement atteindre la station BTS et il est nécessaire de pouvoir, au niveau de la station BTS, recevoir correctement ce signal, qu'il soit ou non affecté d'un retard pouvant aller jusqu'à cette valeur. Les multi-trajets importants se produisent notamment dans les milieux montagneux mais sont presque inexistants en milieu urbain, notamment si le terrain est plat. Les immeubles introduisent en effet peu de multi-trajet et ont plutôt tendance à affaiblir le signal ou créer des interférences. Lorsque le multi-trajet est faible, par exemple de l'ordre de 6 μs, la station dispose donc d'un temps de garde de 10 μs qui autorise le mobile à ne pas transmettre ses données à l'instant exact qui lui a été indiqué à l'aide de l'information de décalage temporel TA. En conséquences, on peut tolérer une erreur relativement grande sur le TA transmis par la station BTS au mobile lorsque le multi-trajet est faible, c'est à dire en milieu urbain où les cellules sont de taille réduite.

Cette erreur peut être facilement calculée en connaissant le multi-trajet maximum qu'il est possible d'obtenir au niveau de chaque station BTS. En prenant comme exemple une station BTS qui mesure un multi-trajet maximum de 6 μs, il reste un temps de garde de 10 μs qui permet d'autoriser une erreur de distance. Cette erreur de distance correspond à la différence entre l'éloignement effectif du mobile qui demande à se connecter à la station et l'éloignement correspondant au TA affecté à ce mobile. Or 10 μs correspondent à une distance de 3000 m et Si l'on suppose que la cellule candidate a un rayon de 1500 m, l'avance temporelle affecté au mobile par sa station BTS correspondra à cette distance de 1500m. Cependant, comme le mobile qui demande à effectuer un handover peut être situé, dans la pire des configurations envisageable, au pied de la station BTS avec laquelle il était en train de communiquer (il est en effet possible qu'un mobile soit à proximité d'une station mais qu'il ne puisse communiquer avec elle du fait d'un masquage ou alors d'un parasitage local, et il est alors nécessaire de pouvoir effectuer un handover réussi vers une autre cellule), l'erreur de distance sera de 1500 m (erreur sur TA de 10 μs) mais sera transparente pour la station BTS qui recevra tout de même correctement le signal du mobile grâce au temps de garde.

De façon générale, l'erreur autorisée sur le TA est de (16-Tmt) où Tmt correspond au temps de multi-trajet maximum mesuré par la deuxième station.

Dans la configuration précédente, le procédé de handover selon l'invention est applicable à toute cellule dont la limite la plus éloignée de la station BTS est de 1500 m (pour un multi-trajet de 6 μs), lorsqu'une procédure de handover demandée par un mobile situé à proximité immédiate d'une autre station BTS doit pouvoir être honorée.

A titre d'exemple, pour un multi-trajet de 6 μs, l'incertitude sur le TA fourni correspond à une distance de 1500 m. Dans un réseau urbain, si les cellules font au maximum 1500 m de rayon, un handover sera effectué avec succès dans un rayon de 3000 m de la station cible. En effet:

- si le mobile est à 1500 m de la station cible, le TA fourni correspond exactement à la position du mobile,
- si le mobile est à proximité immédiate de la station cible, l'erreur commise sur le TA fourni est de 10 μs d'avance, cette erreur étant sans influence sur les signaux émis par le mobile grâce au temps de garde,
- si le mobile est à 3000 m de la station cible, l'erreur est également de 10 μs de retard et également sans influence sur les signaux émis.

Le procédé de l'invention s'applique également pour des cellules cibles de taille importante lorsque le multi-trajet est faible.

Dans un mode de mise en oeuvre avantageux, l'information d'avance temporelle TA correspond au rayon maximum de la cellule cible. Lorsque les cellules ont un rayon inférieur ou égal à l'erreur effectuée sur TA (fonction du multi-trajet), il est possible pour un mobile d'effectuer avec succès un handover qu'il se situe à proximité immédiate de la station cible ou alors à deux fois la distance correspondant à l'erreur commise.

Selon un autre mode de mise en oeuvre du procédé de l'invention, la valeur de l'information d'avance temporelle est le résultat d'un calcul prenant en compte la configuration effective de la cellule cible. Il est en effet possible de mesurer l'avance temporelle de chaque mobile qui se connecte à la station d'une cellule, et de définir ainsi une avance temporelle minimale ainsi qu'une avance temporelle maximale des mobiles. Un calcul statistique peut également être réalisé à partir des avances temporelles mesurées. Ainsi, en définissant $TA_m$ comme étant l'avance temporelle minimale des mobiles lorsqu'ils se connectent à la nouvelle station et $TA_M$ comme l'avance temporelle maximale de ces mobiles, l'avance temporelle TA qui sera affectée à chaque mobile désireux de se connecter sur la station de cette cellule sera égal à:

$$TA = \frac{TA_M + TA_m}{2}$$

En ayant défini ces termes, on peut considérer que la présente invention s'applique dès lors que la relation suivante est respectée: $TA_M - TA_m < 2 \times (16 - Tmt)$.

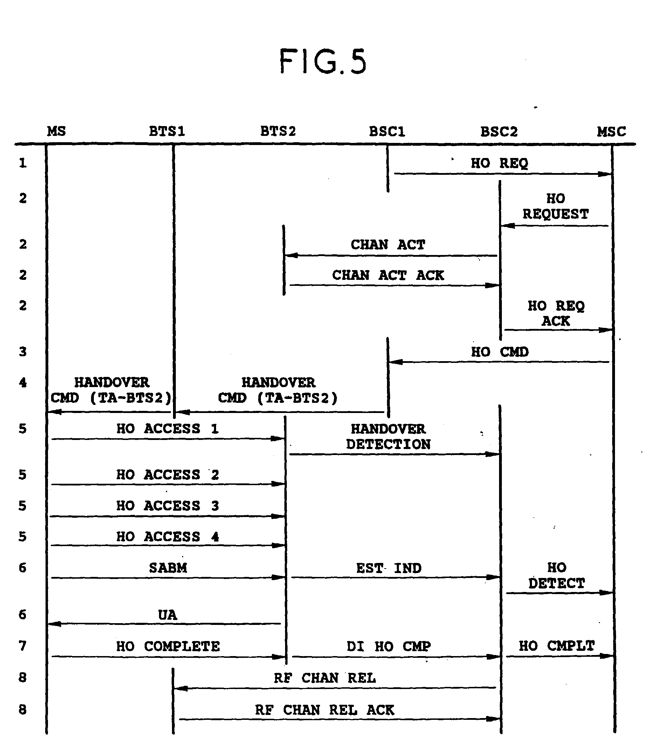

La présente invention s'applique non seulement à un handover effectué dans un même BSS (handover interne), mais également aux handover inter-BSS (handover externe) comme représenté à la figure 5.

A l'étape 1, le contrôleur BSC1 transmet au commutateur MSC un message HO REQ indiquant que le mobile MS désire entrer en communication avec la station BTS2. A l'étape 2, le MSC transmet cette demande à BSC2 (message HO REQUEST) qui procède à une allocation de canal de BTS2 (message CHAN ACT). La station BTS2 répond par un message CHAN ACT ACK et BSC2 transmet un message HO REQ ACK au commutateur MSC. A l'étape 3, le commutateur génère un ordre de handover (message HO CMD) destiné à BSC1. A l'étape 4, BSC1, qui est le contrôleur de la station avec laquelle le mobile MS communique, envoie le message HANDOVER CMD (TA-BTS2) précédemment défini à MS. Le mobile MS interrompt sa communication en cours et génère par exemple quatre HO ACCESS successifs (étape 5). La station BTS2 détecte le premier message HO ACCESS 1 et envoie un message HO DETECTION à BSC2 qui le retransmet à MSC. La suite de la procédure (étapes 7 et 8) est identique à celle de la figure 4.

Les étapes 4 et 5 de l'invention correspondent à celles d'un handover synchrone qui ne comporte pas la fourniture de l'avance temporelle TA par la BTS destinatrice. On voit donc que la procédure de handover de l'invention permet de réaliser un handover aussi efficace qu'un handover synchrone, mais dans un réseau de transmission GSM où les stations BTS sont asynchrones. Les mêmes performances qu'un handover synchrone sont atteintes, mais le coût est fortement réduit puisqu'il est inutile de synchroniser le réseau.

La figure 6 représente une structure simplifiée d'un mobile utilisé dans la présente invention.

Le mobile MS comporte des moyens d'émission-réception 60, des moyens 61 d'extraction de synchronisation et des moyens 62 d'extraction de l'information d'avance temporelle. Les moyens d'émission-réception 60 sont raccordés à une antenne 63 et comportent notamment un modulateur et un démodulateur, les moyens 61 assurant les récupérations de rythme (tops horaires émis par la station de base) ainsi que le contrôle des différentes fonctions au niveau du mobile. Les moyens 62 extraient l'information d'avance temporelle du signal reçu (HANDOVER CMD) et pilotent les moyens 60 pour que ceux-ci assurent l'émission des données de parole dans le créneau temporel affecté au mobile. Les moyens 61 et 62 sont essentiellement constitués par du logiciel.

La figure 7 représente une table 70 dans laquelle une information d'avance temporelle de valeur prédéterminée est affectée à chaque station cible possible. Cette table est avantageusement comprise au niveau du contrôleur de la station cible dans un cas de handover externe et dans le contrôleur de la station courante dans un cas de handover interne. Les communications passent cependant par le contrôleur de la station avec laquelle le mobile dialogue.

Sur la figure représentée, la table comporte des informations d'avance temporelles prédéfinies TA-BTS1 à TA-BTSn correspondant à n stations cibles possibles raccordées à ce contrôleur. Si la station cible est par exemple BTS3, la valeur de l'information d'avance temporelle qui sera communiquée au mobile est TA-BTS3.

Le principal avantage de l'invention est qu'il ne nécessite pas de calcul de la valeur de l'avance temporelle puisque celle-ci est prédéterminée. D'autre part, l'émission de cette valeur peut être effectuée dans un message existant et ne prend donc pas de temps significatif sur la communication en cours.

On peut également noter qu'il est possible de transmettre au mobile une information selon laquelle la cellule cible a une taille correspondant à une valeur d'avance temporelle prédéfinie, mémorisée par le mobile. Cette information peut être transmise au mobile en même temps que l'ordre de changement de cellule et celui-ci peut alors prendre comme avance temporelle cette valeur prédéterminée pour avancer l'émission de ses signaux. Ce mode de fonctionnement n'est cependant valable que si la taille de la cellule cible correspond sensiblement à la valeur d'avance temporelle mémorisée par le mobile. En cas contraire, la valeur de l'avance temporelle que le mobile doit utiliser est transmise en même temps que l'ordre de changement de cellules.

## Revendications

1. Procédé d'échange d'informations entre notamment un mobile (MS), au moins deux stations émettrices-réceptrices (BTS) et au moins un contrôleur (BSC) de stations compris dans un réseau de radiotéléphonie cellulaire où lesdits échanges d'information entre ledit mobile (MS) et lesdites stations (BTS) sont de type à accès multiple à répartition dans le temps, ledit procédé consistant à fournir audit mobile (MS) une information d'avance temporelle (TA) lorsque celui-ci passe d'une première cellule (C1), correspondant à la couverture géographique d'une première (BTS1) desdites stations, à une deuxième cellule (C2), correspondant à la couverture géographique d'une deuxième (BTS2) desdites stations, caractérisé en ce que ladite information d'avance temporelle (TA) est de valeur prédéterminée.

2. Procédé selon la revendication 1, caractérisé en ce qu'il consiste également à transmettre de ladite première station (BTS1) audit mobile (MS) un ordre (HANDOVER CMD) de changement de cellule en réponse à une demande (MEAS REP) de changement de cellule formulée par ledit mobile (MS), ladite information d'avance temporelle (TA) de valeur prédéterminée étant transmise audit mobile (MS) par ladite première station (BTS1) en même temps que ledit ordre (HANDOVER CMD) de changement de cellule.

3. Procédé selon la revendication 1, caractérisé en ce que ladite information d'avance temporelle (TA) est émise par le contrôleur de ladite première station (BTS1) et reçue par ladite première station (BTS1) et en ce que ladite première station (BTS1) retransmet ladite information d'avance temporelle (TA) audit mobile (MS) de façon transparente.

4. Procédé selon la revendication 3, caractérisé en ce que ledit ordre (HANDOVER CMD) de changement de cellule est transmis à ladite première station (BTS1) par le contrôleur de ladite première station (BTS1), ladite information d'avance temporelle (TA) de valeur prédéterminée étant transmise de façon transparente audit mobile (MS) par ladite première station (BTS1) en même temps que ledit ordre (HANDOVER CMD) de changement de cellule.

5. Procédé selon l'une des revendications 1 à 4, caractérisé en ce qu'il est mis en oeuvre dans un réseau de radiotéléphonie cellulaire où lesdites stations (BTS) sont asynchrones entre elles.

6. Procédé selon l'une des revendications 1 à 5, caractérisé en ce que ladite information d'avance temporelle (TA) correspond au temps de transmission d'un signal radio entre ladite deuxième station (BTS2) et un mobile (MS) situé sur le rayon de taille maximale de ladite deuxième cellule (C2).

7. Procédé selon l'une des revendications 1 à 5, caractérisé en ce que ladite information d'avance temporelle (TA) est égale à:

$$\frac{TA_M + TA_m}{2}$$

où $TA_M$ correspond à l'avance temporelle maximale des mobiles (MS) lorsqu'ils se connectent à ladite deuxième station (BTS2) et où $TA_m$ correspond à l'avance temporelle minimale de ces mobiles (MS).

8. Procédé selon l'une des revendications 1 à 7, caractérisé en ce qu'il est appliqué à une procédure de handover interne.

9. Procédé selon l'une des revendications 1 à 7, caractérisé en ce qu'il est appliqué à une procédure de handover externe.

10. Procédé selon l'une des revendications 1 à 9, caractérisé en ce que ledit réseau de radiotéléphonie cellulaire est de type GSM.

11. Mobile (MS) destiné à communiquer par accès multiple à répartition dans le temps avec des stations émettrices-réceptrices (BTS) d'un réseau de radiotéléphonie cellulaire, ledit mobile (MS) comprenant des moyens (62) d'extraction d'une information d'avance temporelle (TA) comprise dans un message transmis par une desdites stations (BTS1) lorsqu'il passe d'une première cellule (C1), correspondant à la couverture géographique d'une première (BTS1) desdites stations, à une deuxième cellule (C2), correspondant à la couverture géographique d'une deuxième (BTS2) desdites stations, ledit message (HANDOVER CMD) étant un ordre de changement de cellule qui lui est transmis par ladite première station (BTS1).

12. Contrôleur (BBC) de stations émettrices-réceptrices d'un réseau de radiotéléphonie cellulaire, caractérisé en ce qu'il comporte une table (70) dans laquelle une information d'avance temporelle (TA) prédéterminée est affectée à chaque station (BTS) et en ce que, lorsque ledit mobile (MS) passe d'une première cellule (C1), correspondant à la couverture géographique d'une première (BTS1) desdites stations, à une deuxième cellule (C2), correspondant à la couverture géographique d'une deuxième (BTS2) desdites stations, ledit contrôleur (BSC) transmet un ordre de changement de cellule (HANDOVER CMD) à ladite première station (BTS1), ledit ordre de changement de cellule (HANDOVER CMD) comprenant l'information d'avance temporelle (TA-BTS2) affectée à ladite deuxième station (BTS2).

13. Système d'échange d'informations entre notamment un mobile (MS), au moins deux stations émettrices-réceptrices (BTS) et au moins un contrôleur (BSC) de stations compris dans un réseau de radiotéléphonie cellulaire où lesdits échanges d'information entre ledit mobile (MS) et lesdites stations (BTS) sont de type à accès multiple à répartition dans le temps, ledit mobile (MS) comprenant des moyens d'extraction d'une information d'avance temporelle (TA) comprise dans un message (HANDOVER CMD) transmis par une desdites stations (BTS1) lorsqu'il passe d'une première cellule (C1), correspondant à la couverture géographique d'une première (BTS1) desdites stations, à une deuxième cellule (C2), correspondant à la couverture géographique d'une deuxième (BTS2) desdites stations, caractérisé en ce que ladite information d'avance temporelle (TA) est de valeur prédéterminée.

14. Système selon la revendication 13, caractérisé en ce que ledit message est un ordre (HANDOVER CMD) de changement de cellule émis en réponse à une demande (MEAS REP) de changement de cellule formulée par ledit mobile (MS), ladite information d'avance temporelle (TA) de valeur prédéterminée étant transmise audit mobile (MS) par ladite première station (BTS1) en même temps que ledit ordre (HANDOVER CMD) de changement de cellule.

15. Système selon l'une des revendications 13 et 14, caractérisé en ce que ledit contrôleur (BSC) comporte une table dans laquelle une information d'avance temporelle (TA) prédéterminée est affectée à chaque station (BTS) et en ce que, lorsque ledit mobile (MS) passe d'une première cellule (C1), correspondant à la couverture géographique d'une première (BTS1) desdites stations, à une deuxième cellule (C2), correspondant à la couverture géographique d'une deuxième (BTS2) desdites stations, ledit contrôleur (BSC) transmet un ordre de changement de cellule (HANDOVER CMD) à ladite première station (BTS1), ledit ordre de changement de cellule (HANDOVER CMD) comprenant l'information d'avance temporelle (TA-BTS2) affectée à ladite deuxième station (BTS2).

16. Système selon l'une des revendications 13 à 15, caractérisé en ce que ladite information d'avance temporelle (TA) correspond au temps de transmission d'un signal radio entre ladite deuxième station (BTS2) et un mobile (MS) situé sur le rayon de taille maximale de ladite deuxième cellule (C2).

17. Système selon l'une des revendications 13 à 15, caractérisé en ce que ladite information d'avance temporelle (TA) est égale à:

$$\frac{TA_M + TA_m}{2}$$

où $TA_M$ correspond à l'avance temporelle maximale des mobiles (MS) lorsqu'ils se connectent à ladite deuxième station (BTS2) et où $TA_m$ correspond à l'avance temporelle minimale de ces mobiles (MS).

# FIG.1

# FIG. 2

# FIG.3

| MS | BTS1 | BTS2 | .BSC | MSC |
|---|---|---|---|---|

1  MEAS REP

2  MEAS RES

3  CHAN ACT

3  CHAN ACT ACK

4  HANDOVER CMD    HANDOVER CMD

5  HANDOVER ACCESS

5  PHYS INFO

6  SABM

6  UA    ESTABLISH INDICATION

7  HANDOVER COMPLETE    DI (HANDOVER CMPLT)    HO. PERF.

8  RF CHAN REL

8  RF CHAN REL ACK

# FIG.4

| | MS | BTS1 | BTS2 | BSC | MSC |
|---|---|---|---|---|---|

1 — MEAS REP (MS → BTS1)

2 — MEAS RES (BTS1 → BSC)

3 — CHAN ACT (BSC → BTS2)

3 — CHAN ACT ACK (BTS2 → BSC)

4 — HANDOVER CMD (TA-BTS2) (MS), HANDOVER CMD (TA-BTS2) (BSC → BTS1 → MS)

5 — HO ACCESS 1 (MS → BTS2)

5 — HO ACCESS 2 (MS → BTS2)

5 — HO ACCESS 3 (MS → BTS2)

5 — HO ACCESS 4 (MS → BTS2)

6 — SABM (MS → BTS2)

6 — UA (BTS2 → MS), ESTABLISH INDICATION (BTS2 → BSC)

7 — HANDOVER COMPLT (MS → BTS2), DI (HANDOVER CMPLT) (BTS2 → BSC), HO. PERF. (BSC → MSC)

8 — RF CHAN REL (BSC → BTS2)

8 — RF CHAN REL ACK (BTS2 → BSC)

# FIG.5

| MS | BTS1 | BTS2 | BSC1 | BSC2 | MSC |
|----|------|------|------|------|-----|

1        HO REQ →

2        HO REQUEST ←

2        CHAN ACT ←

2        CHAN ACT ACK →

2        HO REQ ACK →

3        HO CMD ←

4    HANDOVER CMD (TA-BTS2)    HANDOVER CMD (TA-BTS2) ←

5    HO ACCESS 1 →    HANDOVER DETECTION →

5    HO ACCESS 2 →

5    HO ACCESS 3 →

5    HO ACCESS 4 →

6    SABM →    EST IND →    HO DETECT →

6    UA ←

7    HO COMPLETE →    DI HO CMP →    HO CMPLT →

8    RF CHAN REL ←

8    RF CHAN REL ACK →

# FIG.6

# FIG.7

| BTS1 | TA-BTS1 |
|------|---------|
| BTS2 | TA-BTS2 |
| BTS3 | TA-BTS3 |
| BTS4 | TA-BTS4 |
|      |         |
|      |         |
| BTSn | TA-BTSn |

EP 1 032 234 A1

| Office européen des brevets | RAPPORT DE RECHERCHE EUROPEENNE | Numéro de la demande EP 00 10 6019 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | MOULY M ET AL: "THE PSEUDO-SYNCHRONISATION, A COSTLESS FEATURE TO OBTAIN THE GAINS OF A SYNCHRONISED CELLULAR NETWORK" MRC MOBILE RADIO CONFERENCE, 13 novembre 1991 (1991-11-13), pages 51-55, XP000391318 NICE, FR | 11,13,14 | H04Q7/04 H04B7/26 |
| A | * le document en entier * | 1,2,5, 10,15 | |
| X,P | WO 92 22966 A (TELEFONAKTIEBOLAGET LM ERICSSON) 23 décembre 1992 (1992-12-23) | 1,8,9,11 | |
| A | * page 2, ligne 10 - page 3, ligne 7 * | 2-4,7, 10,13, 14,17 | |
| | * page 5, ligne 21 - ligne 31 * * page 8, ligne 22 - page 11, ligne 2 * | | |

| DOMAINES TECHNIQUES RECHERCHES (Int.Cl.5) |
|---|
| H04B |

Le présent rapport a été établi pour toutes les revendications

| Lieu de la recherche | Date d'achèvement de la recherche | Examinateur |
|---|---|---|
| LA HAYE | 4 juillet 2000 | Behringer, L.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 1 032 234 A1

ANNEXE AU RAPPORT DE RECHERCHE EUROPEENNE
RELATIF A LA DEMANDE DE BREVET EUROPEEN NO.

EP 00 10 6019

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

04-07-2000

| Document brevet cité au rapport de recherche | Date de publication | Membre(s) de la famille de brevet(s) | | Date de publication |
|---|---|---|---|---|
| WO 9222966 A | 23-12-1992 | US | 5355515 A | 11-10-1994 |
| | | AU | 651709 B | 28-07-1994 |
| | | AU | 2022592 A | 12-01-1993 |
| | | CA | 2089383 A | 13-12-1992 |
| | | JP | 6503219 T | 07-04-1994 |
| | | MX | 9202692 A | 01-12-1992 |
| | | SE | 9300245 A | 29-03-1993 |